# EUROPEAN PATENT SPECIFICATION

(11) **EP 2 144 736 B1**
(45) Date of publication and mention of the grant of the patent: **10.12.2014**
(21) Application number: 08737428.6
(22) Date of filing: 11.04.2008
(51) Int. Cl.: B28B 15/00, E04B 1/348

(54) **AN ARRANGEMENT RELATED TO A TRANSPORT SYSTEM**
MIT EINEM TRANSPORTSYSTEM VERWANDTE ANORDNUNG
DISPOSITIF ASSOCIÉ UN SYSTÈME DE TRANSPORT

(30) Priority: 12.04.2007 SE 0700907
(43) Date of publication of application: 20.01.2010
(73) Proprietor: Klersy, Hans-Berth, 65185 Wiesbaden (DE)
(72) Inventor: KINAST, Gerhard, Eilenburg (DE); KLERSY, Hans-Berth, 65185 Wiesbaden (DE)
(74) Representative: Groth & Co. KB
(86) International application number: PCT/IB2008/000891
(87) International publication number: WO 2008/125956

(56) References cited:
- WO-A1-2008/102267
- WO-A1-2008/102268
- DE-A1- 2 252 087
- DE-A1- 2 338 445
- DE-A1- 3 344 034
- DE-A1- 4 141 829
- US-A- 3 962 773

## Description

### TECHNICAL FIELD

The present invention relates in general to an arrangement related to a transport system.

More specifically, the present invention has its application to an arrangement related to said transport system which is adapted for a horizontal displacement of a number of coordinated platform sets.

Even more specifically the present invention will find its application to one such arrangement, related to a transport system, which is adapted for movably permitting the transport, by a horizontally oriented displacement movement, of a number of platform sets, each with allocated platform segments or one or more support tables, coordinated within and oriented to form a "closed" transport path.

The extent of such a transport path and a successive passage of the platform sets and/or the support tables, along an extent of an endless or closed transport path, may then be particularly adapted for an assembly of and/or a production of units and/or modules, such as semi- or complete manufactures, according to an "endless assembly line principle".

Primarily, the present invention is intended for an application as regards transporting or displacing heavy platform sets, intended to support one or more heavy produced units and/or modules, along an endless transport path, where the disclosed transport sequence may be stepwise and most suitably driven, directly or indirectly, by connectable piston-cylinder arrangements.

The present invention is intended to be advantageously adapted to and applied within a system, which is illustrated and described in greater detail in a Swedish Patent Application number 07 00441-9 entitled "Transport system adapted to be able to offer a sequential assembly of house bodies", and its corresponding International Patent Application, published under no. WO 2008/102268 A1.

The contents of WO 2008/102268 disclose an embodied part of the contents of the present patent application, and its lecture may clarify certain details in association with the principle application of the present invention.

The present invention is intended for an application in heavy platform sets, with an inherent weight of up to and about 200 kg/m² and with a loading capacity of up to and about 250-300 kg/m².

### BACKGROUND ART

Methods, arrangements and constructions, related to the above disclosed technical field and with a function and a nature which satisfy set requirements, are previously known in a plurality of different embodiments.

As one example of the background art and the technical field to which the present invention relates mention might be made of a movable transport arrangement, driven by hydraulic piston-cylinder assemblies in order continuously or discontinuously to make for the movement of assembly tables or the like along an ended or endless transport path extent and where each one or said assembly tables is disposed to successively permit stopping at and/or passing one, among several successively accessible, plurality of assembly stations.

In the prior art technology, use has also been intimated of a number of coordinated platform sets and where a desired coordinated displacement takes place with the aid of a single transporting arrangement.

It is also known in the art that a caused movement of very heavy platform sets, with their individual platform segments and very heavy loads and/or details as units and/or modules, carried thereon, meet quite specific challenges in order to be able to create an exact alignment of the displacement extent (straight displacement extent or angled, such as a displacement extent formed to a right angle), in combination with efficiently being able to master and simply overcome not only a friction at rest but also an occurring sliding friction between the support surface or the substrate.

In such instance, also forming part of the state of the art, is the contents in German Patent Publication DE-A1-41 41 829.

Said patent publication discloses an arrangement transforming a first direction of movement to a second direction of a movement oriented at right angles and where a long movement distance for a first movement direction can be transformed over to a short movement distance for a second movement direction.

This transformation here takes place via a pin arrangement which cooperates with a "straight" groove or straight inclined slot in a plate in order, by the movement of the pin arrangement in one direction, to make for the displacement of the plate in another direction and where the relationship between the displacement speeds is constant.

The prior art also include the contents of the Patent Publication DE-A1-3 344 034 where it is described the use of a factory hall and a production line where in an intermediate section (25) using a moving path for the production of large units by using concrete moulding technique.

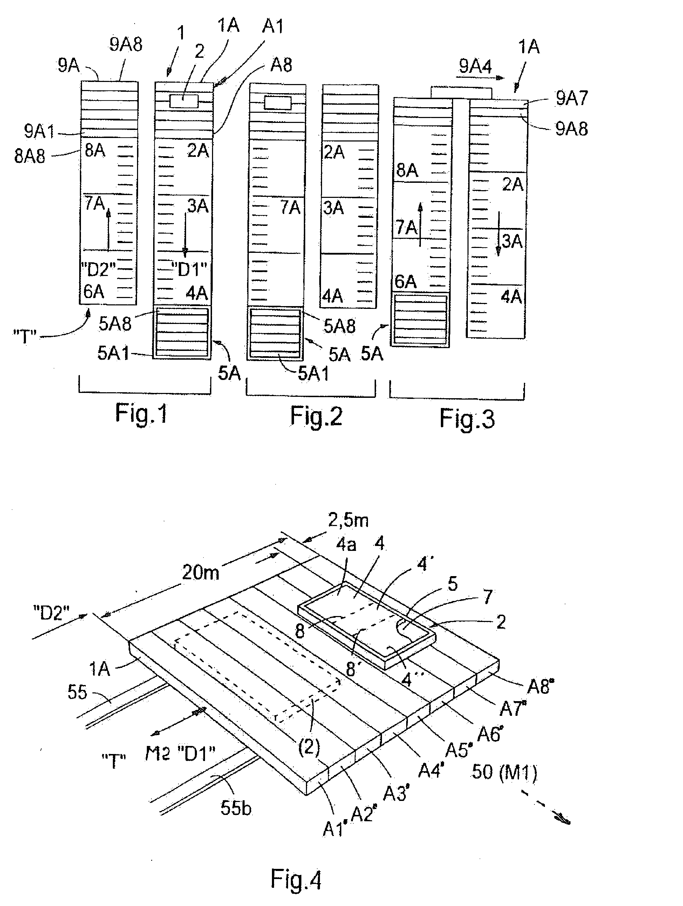

It is here suggested the use of two adjacently oriented heating tunnels (2, 3 in Fig. 3), each exposing tracks or paths (4, 5) and tracks or paths (7, 8).

This publication discloses two parallel oriented production lines (I; II) for the production of pallets.

The Patent Publication DE-A1-2 338 445 discloses a method and a device for the production of units or arrangements in the form of pallets.

It is here suggested preparatory sections (1-3) in a first production line segment, a perpendicular to said production line arranged transporting line or displacement means to transport the pallets to production sections (4, 5, 6 and 7).

Sections (1-3) within the preparatory transporting line and the sections (4-7) within the production line are oriented in parallel.

Each pallet is exposing a rectangular form and is transported in a direction along the long sides.

The Patent Publication US-A-3 962 773 relates to methods for the manufacture of prefabricated building section or room units and to factories for the implementation of such methods.

According to this document, there is provided a method for the manufacture of prefabricated building sections on a production line, the method comprising the steps of assembling prefabricated panels in at least one assembly jig, arranging and holding the panels in the jig in their correct relative positions, securing the panels to one another in those positions to form the sections which are in an at least basically completed structural condition, and moving the assembled sections out of the assembly jig for finishing operations on a further part of the production line.

As such, there is a need for developing improved methods and arrangements for transporting heavy platform sets, intended to support one or more heavy produced units and/or modules during assembly thereof.

### BRIEF SUMMARY OF THE INVENTION

The present invention takes as its point of departure or origin the prior art technology as disclosed by way of introduction in the form of a number of transporting arrangements intended for the displacement of coordinated platform sets.

According to the present invention, there is provided a transporting arrangement as disclosed in claim 1. Preferred embodiments, falling within the scope of the present invention, are disclosed in the dependent claims.

### BRIEF DESCRIPTION OF THE ACCOMPANYING DRAWINGS

One currently proposed application and its related embodiment of the present invention within a transport system and one preferred embodiment of a transport related arrangement, displaying the significative characterising features associated with the present invention will now be described in greater detail hereinbelow for purposes of exemplification with reference to the accompanying Drawings, wherein:
**Fig. 1** shows a proposed and preferred endless conveyor path in plan view within a transport system, with a number of platform sets and platform segments related thereto in a first position and a first process sequence;
**Fig. 2** shows a proposed and preferred endless conveyor path in plan view within a transport system, with a number of platform sets and platform segments related thereto in an illustrated second position and a second process sequence;
**Fig. 3** shows a proposed and preferred endless conveyor path in plan view within a transport system, with a number of platform sets and platform segments related thereto in an illustrated third position and a third process sequence;
**Fig. 4** is a perspective presentation of the principles of a platform set, which within a transport system is coordinated with a number of eight platform segments, where
**Fig. 5** is a perspective presentation and exploded view of draw and/or push rods or rod arrangements, oriented to a right angle (90°), included in a transport-related arrangement, according to the disclosures of the invention, where each one of these rods is to be in cooperation each with its rod displacing means, such as a first means and a fourth means;
**Fig. 6** is a side elevation of a blocking means, built into a rod, and assuming an upper position in order thereby to block its cooperation with a hole-formed rail, where the rail is fixedly related to a platform set or to a platform segment;
**Fig. 7** is a side elevation of the blocking means, built into the rod, according to Fig. 6, assuming a lower position, depressed by the hole-formed rail, in order thereby to release its blocking cooperation with the holes of the hole-formed rail, where the rail is fixedly related to a platform set or to a platform segment;
**Fig. 8** shows schematically, in plan view and in block form, a transport system with a transport related arrangement, which makes for illustration of the principle control of the invention with four sets of reciprocally displaceable means, where each one is connected to a guide device;
**Fig. 9** shows an unambiguous coordination, valid for the present invention, between a first support and running rail and a platform segment (to the left) and between a second support and running rail and a platform segment (to the right) with the blocking means in a fully depressed position;

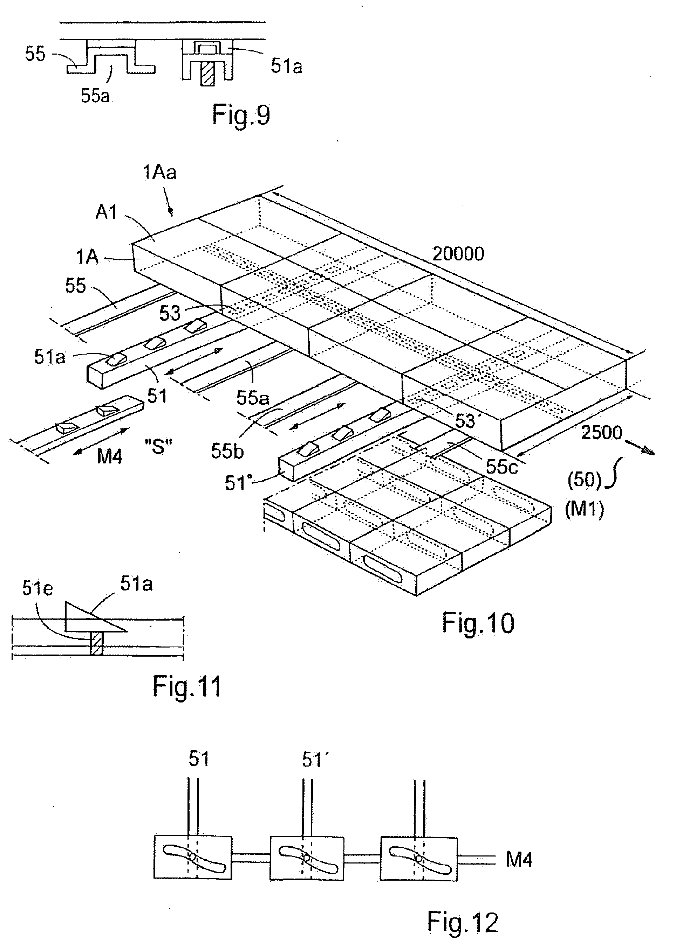

**Fig. 10** is a perspective presentation of a single platform segment, partly resting directly or indirectly against four drawn parallel-oriented planar support and running rails, supported by a support surface, and related at right angles to the elongate side of the platform segment, on the other hand resting against hole-formed rails or rail sections directly secured to the platform segment and oriented there between, where these rails or rail sections are adapted in addition to cooperate in directly resting fashion with two rails formed to a "U" form in cross section, with upwardly directed with blocking means, also these secured to said support surface as well as corresponding, but simplified, arrangements for support and running rails, related at right angles to the short side of the platform segment;
**Fig. 11** is a side elevation of an alternative embodiment of a blocking means, illustrated in Fig. 6, assuming a blocking position and which, against the action of a spring unit, may assume a lowered and a non blocking position; and
**Fig. 12** illustrates one embodiment where a first movement direction is transformed, via an arrangement, to a second movement direction oriented at right angles thereto, under the utilisation of a curved form, where a beginning movement is selected little, an intermediate oriented movement is selected larger and a terminating movement once again is selected little.

### DESCRIPTION OF A CURRENTLY PROPOSED EMBODIMENT

By way of introduction, it should be emphasised that in the following description of one currently proposed embodiment which displays the significative characterising features associated with the invention and which is clarified by means of the figures shown in the accompanying Drawings, we have selected terms and a special terminology with the intention in such instance principally of making for clarification of the inventive idea.

With reference to accompanying Figs. 1-4 there are thus schematically and in detail illustrated the basic preconditions for a transport system.

Thus, Figs. 1, 2 and 3 show a transport system 1, built up from a platform construction with coordinated platform sets, where each such set consists of an equal or unequal number, but a plurality, of platform segments and allocated different transport sequences, and which system is intended to be able to move, continually or stepwise, an elongate set of platform segments A1 to A8 transversely oriented in relation to the transport direction "D1" and "D2", applicable for each one of the platform sets 1A, 2A, 3A .... 9A.

With the aid of a transport device "T", which cooperates with a plurality of platform segments A1', A2', A3' ... A8' (in Fig. 4), oriented in parallel coordinated to individual platform sets, such as 1A, where the movement pattern, for these platform sets 1A-9A and platform segments A1' .... A8' (platform 1A and further platforms), is adapted to be able to offer a sequential assembly, structured according to the "assembly line principle" of a plurality of house bodies or wholly or partly finished products, units and/or modules.

Initially this takes place by placing, on platform segment A6' and A7' (Fig. 4) within platform set 1A, a metal frame 5 and coordinated module profiles 8, 8' and on site making for the manufacture of floor elements 2, as well as thereafter positioning on the floor element 2 and its concrete slab 4 house-associated modules, construction units, construction parts etc. (not shown), and under the utilisation of a movably disposed platform set, which is to move successively from 1A to 9A, for supporting of an illustrated 2 or more (2) floor elements, for one or more house bodies.

The floor element (2) accommodates the platform segments A2', A3' and A4'.

Said platform construction, with its platform sets 1A ... 9A and where each platform set 1A is composed of a selected plurality of platform segments A1', A2', ... A8' are by displacing means, associated with the transport system, movably disposed in two directions oriented towards one another, where a first direction "D1" is given a first platform set 1A, 2A, 3A, 4A and 5A and a second direction "D2" is given a second platform set 6A, 7A, 8A and 9A, under the exposure of a buffer zone, (here in Fig. 1 located under the platform set 6A).

It is to be noted that a platform set may be virtual as it may contain one or more platform segments.

Fig. 2 illustrates how a coordinated set, in the form of a selected number of platform segments 5A1 ... 5A8 within the platform set 5A, included in said first platform set 1A ... 5A, have been displaced by the transport device "T" to the left, in order to assume the place of the selected buffer zone and thereby coordinatedly be able to be included in a second orientation of platform set 6A ... 9A.

Fig. 3 illustrates an intermediate position where a platform set 9A empty of house bodies, units and/or modules allocated the platform segments 9A8, 9A7 is displaced over so as to form a new platform set (1A).

Fig. 4 is intended to illustrate that, on a complete platform set 1A, with its platform segments A1' to A8', there are manufactured or positioned one or more floor elements 2, (2) with an outer "U"-shaped metal frame 5, with transversely oriented metal profiles 8, 8' with through-going holes, a subjacent insulation panel or mat 7 and a concrete slab 4, divided into sections 4', 4" and forming an upper wear surface 4a.

The construction of this floor element is illustrated and described in greater detail in a filed Swedish Patent Application 07 00440-1 designated "Floor element" and its corresponding International Patent Application, published under no. WO 2008/012267 A1.

According, as this or these floor elements 2, (2) are displaced in said first direction of movement "D1" there are applied to these floor elements 2, (2) separate modules, construction units, construction details, modules etc. within said first platform set 1A which during the displacement is allotted the position of the platform sets 2A, 3A, 4A and 5A.

When the displacement distance along the first direction "D1" is completed for the platform set 1A, downstream to platform set of reference numeral 4A, a coordinated number (eight) of platform segments, such as 5A1 to 5A8 or less, is displaced over so as to form part of an adjacent second platform set and there be given a second displacement direction "D2", according to Fig. 2, and that during this transport distance the virtual platform sets 6A, 7A, 8A and 9A, the not shown house bodies and/or semi-manufactures thereof are complemented further to a finished product, still resting against their own platform segments A6', A7' and , A2', A3' and A4', respectively, although being displaced as a virtual platform set from one platform set position to an adjacent platform set position.

Displacement of one or more platform segments 9A4 from the terminating ninth platform set 9A to the first platform set (1A), according to Fig. 3, can take place piecewise and/or pairwise depending upon need.

A displacement of platform segments, from the ninth platform set to the first platform set, normally takes place as coordinated, such as with 5-10, platform segments by using a third means (M3). Displacement from the fifth platform set to the sixth platform set also takes place as coordinated, such as with 5-10, say eight, platform segments.

When the platform set 1A with its two floor elements 2, (2) is displaced to a position designated the reference number 5A, the platform segments A1'-A4' can of course, as a unit, be displaced to the left while the platform segments A6 and A7 are displaced a selected time interval later to the left, in which event the floor elements 2 and (2) can change place in the production line with said set 6A to 9A.

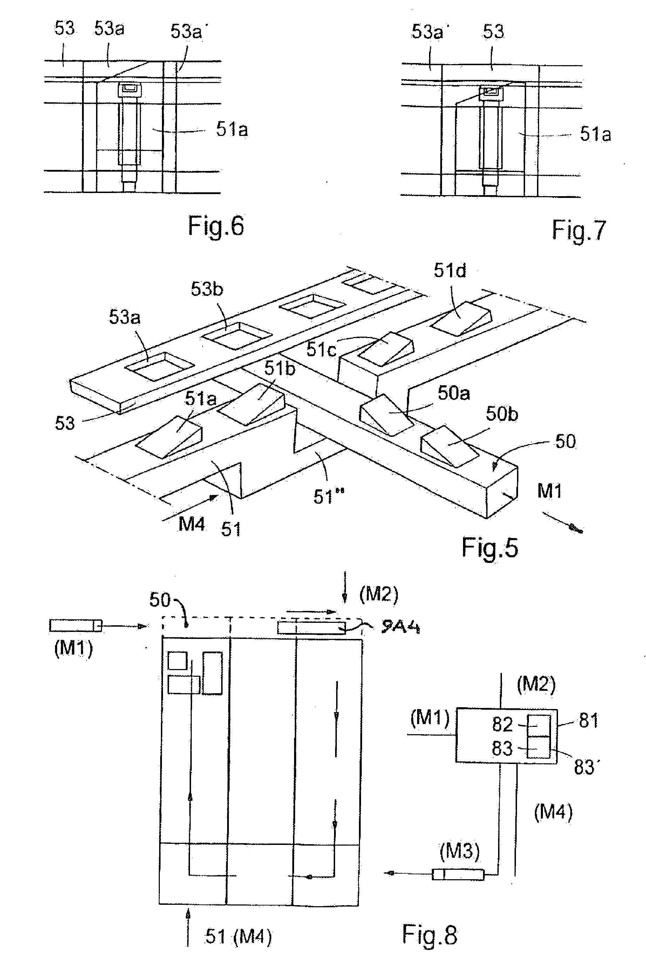

With reference to accompanying Figs. 5 to 12, there are thus illustrated schematically and in detail not only the basic preconditions associated with the transport related arrangement, disclosed for the present invention, but moreover the significative properties associated with the invention have been given concrete form, as a result of the currently proposed embodiment described in greater detail hereinbelow.

Thus, Fig. 5 is a perspective presentation and exploded view of draw and/or push rods or rod arrangements oriented at a right angle (90°) included in the transport related arrangement, where each one of these rods, the rod 50 and the rod 51, are to be in cooperation with its rod displacing means, such as a first means "M1" and a fourth means "M4" as piston-cylinder-arrangements, illustrated in Fig. 8.

Fig. 5 then shows, in a perspective presentation and in an exploded view, draw and/or push rods 50, 51 reciprocally displaceable and oriented to a right angle (90°), where each one of these rods is to be in cooperation with its rod displacing means, such as said first means (M1) and said fourth means (M4) and where Fig. 8 illustrates a presence of the other a second and a third means (M2) and (M3).

Fig. 8 is intended to illustrate a clockwise displacement of the individual virtual platform sets, but there is nothing to prevent instead creating the preconditions for a counter-clockwise displacement movement.

Fig. 8 illustrates schematically and in top plan view a transport system (See Figs. 1 to 3) with four sets of, such as the arms 50, 51, displacing means, where each one is connected to only one, schematically illustrated, guide or control device 81, with a computer unit 82 and program memory 83 and a control memory 83'.

With renewed reference to Fig. 5, it is further illustrated that the arm 50, and also other arms oriented in parallel (not shown), are straight and display a number of sequentially oriented, blocking means 50a, 50b and which blocking means are intended to be able to cooperate with holes 53b in a hole-formed rail 53.

Selected arms, such as pairwise or more, are to be coordinated for a common movement. (See Fig. 12.)

Fig. 5 further illustrates that the arm 51, as well as also other arms (not shown) oriented in parallel, in principle are straight, but with a "U"-shaped portion 51 ", in order thereby to be able to expose and cause the free reciprocal movement of the arm 50 in the same plane as the arm 51.

This arm 51 displays a number of sequentially oriented, blocking means 51a, 51b, 51 c and 51 d and which blocking means 51 a, 51 b are intended to be able to cooperate with formed holes 53a, 53b in a hole-formed rail 53, where the distance between the holes 53a, 53b is here selected to 2.5 cm.

The blocking means 50a, 50b are in their upper position intended to cooperate with allocated holes in the hole-formed rail 53.

Fig. 6 schematically illustrates a blocking means 51 a, built into an arm or rod 51, and assuming an upper position, in order thereby to block its cooperation with the hole 53a of the hole-formed rail 53 and more specially its edge 53a', where the rail 53 is to be fixedly related to a platform set or to a platform segment.

Fig. 7 then shows another position for the blocking means 51a, built into the rod 51, according to Fig. 6, and assuming a lower, a position depressed by the hole-formed rail 53, in order thereby to permit release of its blocking cooperation with the hole 53a of the hole-formed rail 53 and its edge 53a', where the rail is fixedly related to a platform set or to a platform segment.

Fig. 9 now illustrates an unambiguous coordination valid for the invention between a first support and running rail 55a and a platform segment (to the left) and orientable between a second support and running rail 55, 55a and the platform segment with the blocking means 51a in a depressed position.

Fig. 10 now shows, in a perspective presentation, a single platform segment, on the one hand resting directly or indirectly against four drawn planar support and running rails 55, 55a, 55b and 55c oriented in parallel and supported by the support surface "S", and related at right angles to the elongate side of the platform segment "A".

The platform segment "A1" resting against hole-formed rails 53, 53' or rail sections oriented therebetween and directly secured to the platform segment, where these rails or rail sections are adapted moreover to cooperate directly in rest with two rails 51, 51' formed as a "U" form in cross section, provided with upwardly directed, blocking means 51a, 51b, also these secured to said support surface "S" and corresponding, but simplified the arrangements for the support and running rails are related at right angles to the short side 1Aa of the platform segment.

Finally, Fig. 11 is a side elevation of an alternative embodiment of a blocking means 51a, illustrated in Fig. 6 and in Fig. 9, assuming a blocking position and which, against the action of a spring unit 51e can assume a collapsed and non-blocking position.

More specially, the present invention thus discloses an arrangement for the displacement and transporting of a number of coordinated platform sets.

According to the invention, a fourth means M4 should thus be adapted to impart to its allocated platform set, via two or more draw or push rods, a stepwise displacement movement, where said platform set is to be adapted to rest against slide surfaces, oriented in the selected displacement direction.

More specially, it is disclosed that draw and/or push rods 51, 51' allocated to the means M4 and oriented in parallel are to be oriented adjacent and/or between said sliding surfaces 55-55c.

A second means M2 is to be adapted to impart to its allocated platform set a stepwise displacement movement D 1 and in a displacement direction counter-directed to the displacement direction D2 of said fourth means M4.

Thus, said second means M2 is, with its allocated platform sets, and said fourth means M4, with its allocated platform sets, are to be oriented in parallel at a given distance between these.

A third means M3 is now to be adapted to impart to its allocated platform set or segments a displacement movement from said first platform set to said second platform set.

More specially, the displacement movement created by said third means M3 is to be coordinated to a single or a few platform segments.

However, with the aid of on said platform sets oriented in parallel there is offered a structured, sequential assembly according to the "assembly line principle" where a simultaneous assembly can take place of a plurality of house bodies or products, such as whole or semi-manufactures, in which event platform segments for said first platform set, platform segments for said second platform set are by said third displacing means M3 to be movably disposed in two directions oriented towards one another.

A first displacement direction D 1 is then, by a second means M2, to be given a first platform set and/or its platform segments and a second counter-directed displacement movement D2 can be allocated by a fourth means M4 to a second platform set and/or its platform segments, where a first displacing means M1 is adapted to displace a few platform segments from a first to a second, alternatively from a second to a first, virtual platform set position and a third displacing means M3 can then be adapted to displace a selected number of platform sets and/or its platform segments, supporting whole or semi-manufactures, from a second to a first alternatively from the first to a second platform set and/or its platform segments.

The first M1, the second M2, the third M3 and/or the fourth M4 means can then actuate two or more draw and/or push rods and that these advantageously will be able to be recessed in a planar support surface for said sliding surfaces.

Said draw and/or push rods should be given a "U"-shaped cross section with a central portion interconnecting the shanks of the cross section, displaying recesses oriented in series formed as carriers, so that each one of these recesses will be able to surround and the cooperation with releasing and/or blocking means.

The platform sets support within their underside parallel-oriented carriers with recesses, each one adapted to be able to cooperate with its allocated releasing and/or blocking means.

Each one of or selected first, second, third and/or fourth means are advantageously to include a hydraulically actuated piston-cylinder arrangement outside the platform sets and/or platform segments in order via these to permit imparting to said pairwise push- or draw rods a reciprocal movement pattern.

A control unit is then to be programmed such that and directly adapted to selectively and temporarily in coordination or temporarily separately actuate said piston-cylinder arrangement in order to displace platform sets and individual platform segments in an endless or coordinated end related paths.

Said control unit is then to be disposed to activate said piston-cylinder arrangement in accordance with a process sequence, controlled by a program 83, 83' included in a computer unit 82.

The invention is naturally not restricted to the embodiment described above by way of example but can undergo modifications within the frame of the inventive concept illustrated in the appended Claims.

Specially it should be observed that every illustrated unit and/or circuit can be combined with every other illustrated unit and/or circuit within the scope in order to be able to attain the desired technical function.

## Claims

1. A transporting arrangement (1) intended for the displacement of a number of platform segments (A1-A8) and/or coordinated virtual platform sets (1A-9A) containing one or more platform segments (A1-A8), comprising:
- first and second displacing means (M2, M4) adapted to impart to their allocated platform sets (1A-4A; 6A-9A) and/or platform segments (A1-A8) a stepwise displacement movement in selected counter-directed first and second displacement directions (D1, D2), and
- third and fourth displacing means (M1, M3) adapted to impart to their allocated platform sets (1A-4A; 6A-9A) and/or platform segments (A1-A8) a displacement movement in selected displacement directions perpendicular to said first and second displacement directions (D1, D2)
wherein said platform sets (1A-9A) and/or platform segments (A1-A8) are adapted to rest against slide surfaces (55, 55a, 55b), oriented in the first and second displacement directions (D1, D2), the transporting arrangement (1) further comprising:
- a first set of parallel oriented draw and/or push rods (51) allocated to said first and second displacing means (M2, M4) and located adjacent to and/or between said slide surfaces (55, 55a, 55b), and
- a second set of parallel oriented draw and/or push rods (50) allocated to said third and fourth displacing means (M1, M3) and oriented perpendicular to said first set of rods (51),
wherein said first set of rods (51) have a U-shaped portion (51') in order to be able to expose and allow a free reciprocal movement of said second set of rods (50).

2. A transporting arrangement as claimed in claim 1, wherein said first and second displacing means (M2, M4), with their allocated platform sets (1A-4A, 6A-9A) and/or platform segments (A1-A8), are oriented in parallel, at a given distance between these.

3. A transporting arrangement as claimed in claim 1 or 2, wherein said third and fourth displacing means (M1, M3) are adapted to impart to their allocated platform set (5A) and/or platform segments (5A1-5A8) a displacement movement from one virtual platform set (1A-4A) and/or platform segments (A1-A8) to another virtual platform set (6A-9A) and/or platform segments (A1-A8).

4. A transporting arrangement as claimed in claim 3, wherein the displacement movement created or caused by said third and/or fourth displacing means (M1, M3) is coordinated to only one or a few platform segments (5A1; 5A8) allocated a platform set (5A).

5. A transporting arrangement as claimed in claim 1 or 2, wherein, with the aid of at least two of said parallel oriented platform sets (1A-5A; 6A-9A) and/or platform segments (A1-A8) there is offered a structured, sequential assembly, in accordance with the "assembly line principle".

6. A transporting arrangement as claimed in claim 1, 2 or 5, wherein a simultaneous assembly of a plurality of house bodies or products, such as whole or semi-manufactures takes place, whereby platform segments (5A8) for a first platform set (1A-5A), and platform segments (9A4) for a second platform set (6A-9A) are movably disposed in each of two directions, oriented counter-directed one another by said third and fourth displacing means (M1, M3).

7. A transporting arrangement as claimed in claim 1 or 6, wherein said third displacing means (M1) is adapted to displace a few platform segments (9A4) from a first to a second alternatively from a second to a first platform set and said fourth displacing means (M3) is adapted to displace a selected number of platform sets and/or platform segments (5A1-5A8), supporting whole or semi-manufactures, from the second to the first alternatively from the first to the second platform set and/or platform segments.

8. A transporting arrangement as claimed in claim 1 or 7, wherein said draw and/or push rods or rod arrangements (50, 51) are recessed in a planar support surface for said slide surfaces (55, 55a, 55b).

9. A transporting arrangement as claimed in claim 8, wherein said draw and/or push rods (50, 51) are given a U-shaped cross section with a central portion (51') interconnecting shanks of the cross section.

10. A transporting arrangement as claimed in claim 1 or 9, wherein the platform sets (1A-5A; 6A-9A) and/or platform segments (A1-A8) are supported within their underside by parallel oriented carriers (53) displaying in series oriented recesses (53a, 53b), each being adapted to cooperate with an allocated releasing and/or blocking means (50a, 50b; 51 a, 51 b) provided on said draw and/or push rods (50, 51).

11. A transporting arrangement as claimed in claim 10, wherein each one of or selected first (M2), second (M4), third (M1) and/or fourth (M3) displacing means include a hydraulically or pneumatically actuated piston-cylinder arrangement oriented outside the platform sets (1A-5A; 6A-9A) and/or the platform segments (A1-A8), in order to impart to said push- or draw rods (50, 51) a reciprocal movement pattern.

12. A transporting arrangement as claimed in claim 11, wherein a control unit (81) is adapted to selectively and coordinated or separate in time actuate said piston-cylinder arrangement in order to displace platform sets (1A-5A; 6A-9A) and/or individual platform segments (A1-A8) within an endless path.

13. A transporting arrangement as claimed in claim 12, wherein said control unit (81) is adapted to activate said piston-cylinder arrangement in accordance with a process sequence, controlled by a program included in a computer unit (82).

14. A transporting arrangement as claimed in claim 1, wherein said first set of parallel oriented rods (51) are adapted to cross said second set of parallel oriented rods (50).

15. A transporting arrangement according to claim 1, wherein said first set of parallel oriented rods (51) are in principle straight, but with a U-shaped portion (51 "), in order thereby to be able to expose and cause a free reciprocal movement of said second set of rods (50) in the same plane as said first set of rods (51).

## Patentansprüche

1. Transportanordnung (1), die zur Verschiebung einer Anzahl von Plattformsegmenten (A1-A8) und/oder von koordinierten virtuellen Plattformsätzen (1A-9A), die ein oder mehrere Plattformsegmente (A1-A8) enthalten, vorgesehen ist, umfassend:
- ein erstes und ein zweites Verschiebungsmittel (M2, M4), die dazu ausgeführt sind, eine schrittweise Verschiebungsbewegung in einer ausgewählten ersten und zweiten Verschiebungsrichtung (D1, D2), die einander entgegengesetzt sind, an ihre zugeordneten Plattformsätze (1A-4A; 6A-9A) und/oder Plattformsegmente (A1-A8) weiterzugeben, und
- ein drittes und ein viertes Verschiebungsmittel (M1, M3), die dazu ausgeführt sind, eine Verschiebungsbewegung in ausgewählten Verschiebungsrichtungen, die zu der ersten und zweiten Verschiebungsrichtung (D1, D2) senkrecht verlaufen, an ihre zugeordneten Plattformsätze (1A-4A; 6A-9A) und/oder Plattformsegmente (A1-A8) weiterzugeben,
wobei die Plattformsätze (1A-9A) und/oder die Plattformsegmente (A1-A8) dazu ausgeführt sind, an Gleitflächen (55, 55a, 55b) anzuliegen, die in der ersten und zweiten Verschiebungsrichtung (D1, D2) ausgerichtet sind, wobei die Transportanordnung (1) weiterhin Folgendes umfasst:
- einen ersten Satz parallel ausgerichteter Zug- und/oder Druckstangen (51), die dem ersten und zweiten Verschiebungsmittel (M2, M4) zugeordnet und neben und/oder zwischen den Gleitflächen (55, 55a, 55b) positioniert sind, und
- einen zweiten Satz parallel ausgerichteter Zug- und/oder Druckstangen (50), die dem dritten und vierten Verschiebungsmittel (M1, M3) zugeordnet und senkrecht zu dem ersten Satz von Stangen (51) ausgerichtet sind,
wobei die Stangen (51) des ersten Satzes einen U-förmigen Abschnitt (51') aufweisen, um den zweiten Satz von Stangen (50) freilegen und ihm eine freie Hin- und Herbewegung gestatten zu können.

2. Transportanordnung nach Anspruch 1, wobei das erste und das zweite Verschiebungsmittel (M2, M4) mit ihren zugeordneten Plattformsätzen (1A-4A, 6A-9A) und/oder Plattformsegmenten (A1-A8) mit einem gegebenen Abstand dazwischen parallel zueinander ausgerichtet sind.

3. Transportanordnung nach Anspruch 1 oder 2, wobei das dritte und das vierte Verschiebungsmittel (M1, M3) dazu ausgeführt sind, eine Verschiebungsbewegung von einem virtuellen Plattformsatz (1A-4A) und/oder Plattformsegmenten (A1-A8) zu einem anderen virtuellen Plattformsatz (6A-9A) und/oder anderen Plattformsegmenten (A1-A8) an ihren zugeordneten Plattformsatz (5A) und/oder ihre zugeordneten Plattformsegmente (5A1-5A8) weiterzugeben.

4. Transportanordnung nach Anspruch 3, wobei die durch das dritte und/oder vierte Verschiebungsmittel (M1, M3) erzeugte oder verursachte Verschiebungsbewegung nur mit einem oder einigen Plattformsegmenten (5A1; 5A8), die einem Plattformsatz (5A) zugeordnet sind, koordiniert ist.

5. Transportanordnung nach Anspruch 1 oder 2, wobei mit Hilfe von mindestens zwei der parallel ausgerichteten Plattformsätze (1A-5A; 6A-9A) und/oder Plattformsegmente (A1-A8) ein strukturierter sequenzieller Zusammenbau gemäß dem Fließbandprinzip geboten wird.

6. Transportanordnung nach Anspruch 1, 2 oder 5, wobei ein gleichzeitiger Zusammenbau mehrerer Hauskörper oder Produkte, wie z. B. Fertig- oder Halbfabrikate, stattfindet, wobei Plattformsegmente (5A8) für einen ersten Plattformsatz (1A-5A) und Plattformsegmente (9A4) für einen zweiten Plattformsatz (6A-9A) durch das dritte und vierte Verschiebungsmittel (M1, M3) in jeder der beiden entgegengesetzten Richtungen beweglich angeordnet sind.

7. Transportanordnung nach Anspruch 1 oder 6, wobei das dritte Verschiebungsmittel (M1) dazu ausgeführt ist, einige Plattformsegmente (9A4) von einem ersten zu einem zweiten, als Alternative dazu von einem zweiten zu einem ersten, Plattformsatz zu verschieben und das vierte Verschiebungsmittel (M3) dazu ausgeführt ist, eine gewählte Anzahl von Plattformsätzen und/oder Plattformsegmenten (5A1-5A8), die Fertig- oder Halbfabrikate tragen, von dem/den zweiten zu dem/den ersten, als Alternative dazu von dem/den ersten zu dem/den zweiten, Plattformsatz und/oder Plattformsegmenten zu verschieben.

8. Transportanordnung nach Anspruch 1 oder 7, wobei die Zug- und/oder Druckstangen oder -stangenanordnungen (50, 51) in einer planaren Trägerfläche für die Gleitflächen (55, 55a, 55b) ausgespart sind.

9. Transportanordnung nach Anspruch 8, wobei den Zug- und/oder Druckstangen (50, 51) ein U-förmiger Querschnitt mit einem die Schenkel des Querschnitts verbindenden mittleren Abschnitt (51') verliehen wird.

10. Transportanordnung nach Anspruch 1 oder 9, wobei die Plattformsätze (1A-5A; 6A-9A) und/oder die Plattformsegmente (A1-A8) innerhalb ihrer Unterseite durch parallel ausgerichtete Träger (53) getragen werden, die in Reihe ausgerichtete Aussparungen (53a, 53b) aufweisen, die jeweils dazu ausgeführt sind, mit einem zugeordneten Freigabe- und/oder Sperrmittel (50a, 50b; 51a, 51b), die an den Zug- und/oder Druckstangen (50, 51) vorgesehen sind, zusammenzuwirken.

11. Transportanordnung nach Anspruch 10, wobei jedes oder ausgewählte des ersten (M2), zweiten (M4), dritten (M1) und/oder vierten (M3) Verschiebungsmittels eine hydraulisch oder pneumatisch betätigte Kolbenzylinderanordnung enthält/enthalten, die außerhalb der Plattformsätze (1A-5A; 6A-9A) und/oder der Plattformsegmente (A1-A8) positioniert sind, zum Weitergeben eines Hin- und Herbewegungsmusters an die Druck- oder Zugstangen (50, 51).

12. Transportanordnung nach Anspruch 11, wobei eine Steuereinheit (81) dazu ausgelegt ist, die Kolbenzylinderanordnung zur Verschiebung von Plattformsätzen (1A-5A; 6A-9A) und/oder individuellen Plattformsegmenten (A1-A8) innerhalb eines Endlospfads gezielt und koordiniert oder zeitlich getrennt zu betätigen.

13. Transportanordnung nach Anspruch 12, wobei die Steuereinheit (81) dazu ausgelegt ist, die Kolbenzylinderanordnung gemäß einer Prozessfolge, die durch ein in einer Computereinheit (82) enthaltenes Programm gesteuert wird, zu aktivieren.

14. Transportanordnung nach Anspruch 1, wobei der erste Satz parallel ausgerichteter Stangen (51) dazu ausgeführt ist, den zweiten Satz parallel ausgerichteter Stangen (50) zu überkreuzen.

15. Transportanordnung nach Anspruch 1, wobei die parallel ausgerichteten Stangen des ersten Satzes (51) im Prinzip gerade sind, jedoch einen U-förmigen Abschnitt (51'') aufweisen, um somit den zweiten Satz von Stangen (50) freilegen und ihm eine freie Hin- und Herbewegung in derselben Ebene wie dem ersten Satz Stangen (51) gestatten zu können.

## Revendications

1. Agencement de transport (1) destiné au déplacement d'un certain nombre de segments de plates-formes (A1-A8) et/ou d'ensembles de plates-formes virtuels coordonnés (1A-9A) contenant un ou plusieurs segments de plates-formes (A1-A8), comprenant :
- des premier et deuxième moyens de déplacement (M2, M4) prévus pour conférer à leurs ensembles de plates-formes attribués (1A-4A ; 6A-9A) et/ou à leurs segments de plates-formes attribués (A1-A8) un mouvement de déplacement pas à pas dans des première et deuxième directions de déplacement sélectionnées de sens opposés (D1, D2), et
- des troisième et quatrième moyens de déplacement (M1, M3) prévus pour conférer à leurs ensembles de plates-formes attribués (1A-4A ; 6A-9A) et/ou à leurs segments de plates-formes attribués (A1-A8) un mouvement de déplacement dans des directions de déplacement sélectionnées perpendiculaires auxdites première et deuxième directions de déplacement (D1, D2),
lesdits ensembles de plates-formes (1A-9A) et/ou segments de plates-formes (A1-A8) étant prévus pour s'appuyer contre des surfaces de glissement (55, 55a, 55b), orientées dans les première et deuxième directions de déplacement (D1, D2), l'agencement de transport (1) comprenant en outre
- un premier ensemble de barres de traction et/ou de poussée orientées parallèlement (51) attribuées auxdits premier et deuxième moyens de déplacement (M2, M4) et situées en position adjacente auxdites et/ou entre lesdites surfaces de glissement (55, 55a, 55b), et
- un deuxième ensemble de barres de traction et/ou de poussée orientées parallèlement (50) attribuées auxdits troisième et quatrième moyens de déplacement (M1, M3) et orientées perpendiculairement audit premier ensemble de barres (51),
ledit premier ensemble de barres (51) ayant une portion en forme de U (51') afin de pouvoir exposer et permettre un mouvement alternatif libre dudit deuxième ensemble de barres (50).

2. Agencement de transport selon la revendication 1, dans lequel lesdits premier et deuxième moyens de déplacement (M2, M4), avec leurs ensembles de plates-formes attribués (1A-4A, 6A-9A) et/ou leurs segments de plates-formes attribués (A1-A8), sont orientés parallèlement, à une distance donnée entre ceux-ci.

3. Agencement de transport selon la revendication 1 ou 2, dans lequel lesdits troisième et quatrième moyens de déplacement (M1, M3) sont prévus pour conférer à leur ensemble de plates-formes attribué (5A) et/ou à leurs segments de plates-formes attribués (5A1-5A8) un mouvement de déplacement depuis un ensemble de plates-formes virtuel (1A-4A) et/ou des segments de plates-formes (A1-A8) à un autre ensemble de plates-formes virtuel (6A-9A) et/ou à d'autres segments de plates-formes (A1-A8).

4. Agencement de transport selon la revendication 3, dans lequel le mouvement de déplacement créé ou causé par lesdits troisième et/ou quatrième moyens de déplacement (M1, M3) est coordonné avec seulement un ou quelques segments de plates-formes (5A1 ; 5A8) attribués à un ensemble de plates-formes (5A).

5. Agencement de transport selon la revendication 1 ou 2, dans lequel, à l'aide d'au moins deux desdits ensembles de plates-formes orientés parallèlement (1A-5A ; 6A-9A) et/ou segments de plates-formes (A1-A8), on obtient un ensemble structuré séquentiel conforme au "principe de chaîne d'assemblage".

6. Agencement de transport selon l'une quelconque des revendications 1, 2 ou 5, dans lequel un assemblage simultané d'une pluralité de corps de boîtier ou de produits, tels que des produits finis ou semi-finis a lieu, des segments de plates-formes (5A8) pour un premier ensemble de plates-formes (1A-5A), et des segments de plates-formes (9A4) pour un deuxième ensemble de plates-formes (6A-9A) sont disposés de manière mobile dans chacune de deux directions, orientées en sens opposé l'une de l'autre par lesdits troisième et quatrième moyens de déplacement (M1, M3).

7. Agencement de transport selon la revendication 1 ou 6, dans lequel ledit troisième moyen de déplacement (M1) est prévu pour déplacer quelques segments de plates-formes (9A4) d'un premier à un deuxième, en variante, d'un deuxième à un premier, ensemble de plates-formes et ledit quatrième moyen de déplacement (M3) est prévu pour déplacer un nombre sélectionné d'ensembles de plates-formes et/ou de segments de plates-formes (5A1-5A8), supportant des produits finis ou semi-finis, du deuxième au premier, en variante du premier au deuxième, ensemble de plates-formes et/ou segments de plate-forme.

8. Agencement de transport selon la revendication 1 ou 7, dans lequel lesdites barres de traction et/ou de poussée ou lesdits agencements de barres (50, 51) sont en retrait dans une surface de support plane pour lesdites surfaces de glissement (55, 55a, 55b).

9. Agencement de transport selon la revendication 8, dans lequel lesdites barres de traction et/ou de poussée (50, 51) ont une section transversale en forme de U avec une portion centrale (51') reliant entre elles des branches de la section transversale.

10. Agencement de transport selon la revendication 1 ou 9, dans lequel les ensembles de plates-formes (1A-5A ; 6A-9A) et/ou les segments de plates-formes (A1-A8) sont supportés à l'intérieur de leur côté inférieur par des supports orientés parallèlement (53) présentant des retraits orientés en série (53a, 53b), chacun étant prévu pour coopérer avec un moyen de libération et/ou de blocage associé (50a, 50b ; 51a, 51b) prévu sur lesdites barres de traction et/ou de poussée (50, 51).

11. Agencement de transport selon la revendication 10, dans lequel chacun des moyens de déplacement ou des moyens de déplacement sélectionnés parmi les premier (M2), deuxième (M4), troisième (M1) et/ou quatrième (M3) moyen de déplacement comporte un agencement piston-cylindre actionné hydrauliquement ou pneumatiquement orienté à l'extérieur des ensembles de plates-formes (1A-5A ; 6A-9A) et/ou des segments de plates-formes (A1-A8), afin de conférer auxdites barres de traction et/ou de poussée (50, 51) un schéma de mouvement alternatif.

12. Agencement de transport selon la revendication 11, dans lequel une unité de commande (81) est prévue pour actionner, de manière sélective et coordonnée ou de manière séparée dans le temps, ledit agencement piston-cylindre afin de déplacer des ensembles de plates-formes (1A-5A ; 6A-9A) et/ou des segments de plates-formes individuels (A1-A8) à l'intérieur d'une trajectoire sans fin.

13. Agencement de transport selon la revendication 12, dans lequel ladite unité de commande (81) est prévue pour activer ledit agencement piston-cylindre en fonction d'une séquence de processus, commandée par un programme inclus dans une unité d'ordinateur (82).

14. Agencement de transport selon la revendication 1, dans lequel ledit premier ensemble de barres orientées parallèlement (51) est prévu pour croiser ledit deuxième ensemble de barres orientées parallèlement (50).

15. Agencement de transport selon la revendication 1, dans lequel ledit premier ensemble de barres orientées parallèlement (51) est en principe droit, mais avec une portion en forme de U (51"), afin de pouvoir ainsi exposer et provoquer un mouvement alternatif libre dudit deuxième ensemble de barres (50) dans le même plan que ledit premier ensemble de barres (51).
